# EUROPEAN PATENT APPLICATION

(11) **EP 4 685 876 A1**
(43) Date of publication of application: **28.01.2026**
(21) Application number: 24774923.7
(22) Date of filing: 19.03.2024
(51) Int. Cl.: H01M 4/38, C01B 25/14, C01B 32/354, H01B 1/06, H01B 1/10, H01M 4/136, H01M 4/36, H01M 4/62

(54) **COMPOSITE, POSITIVE ELECTRODE MIXTURE, POSITIVE ELECTRODE FOR LITHIUM ION BATTERY, LITHIUM ION BATTERY, METHOD FOR PRODUCING COMPOSITE, USE OF ACTIVATED CARBON, AND METHOD FOR PRODUCING ACTIVATED CARBON**

(30) Priority: 23.03.2023 JP 2023046813
(71) Applicant: Idemitsu Kosan Co.,Ltd., Tokyo 100-8321 (JP); Kyushu University, National University Corporation, Nishi-ku Fukuoka-shi Fukuoka 819-0395 (JP)
(72) Inventor: ISHIHARA, Yu, Tokyo 100-8321 (JP); HIGUCHI, Hiroyuki, Tokyo 100-8321 (JP); FUJII, Yuta, Tokyo 100-8321 (JP); HANIU, Yamato, Tokyo 100-8321 (JP); MIYAWAKI, Jin, Fukuoka-shi, Fukuoka 819-0395 (JP); YOON, Seong Ho, Fukuoka-shi, Fukuoka 819-0395 (JP); NAKABAYASHI, Koji, Fukuoka-shi, Fukuoka 819-0395 (JP)
(74) Representative: Vossius & Partner Patentanwälte Rechtsanwälte mbB
(86) International application number: PCT/JP2024/010691
(87) International publication number: WO 2024/195788

(57) **Abstract**

This composite includes: activated carbon that has a specific surface area of 1400 m²/g or greater and satisfies one or both of the following conditions (A) and (B); and at least one of elemental sulfur and a discharge product of elemental sulfur. (A) The peak width of the D band in the Raman spectrum of the activated carbon is 100 cm⁻¹ or less. (B) The peak width of the G band in the Raman spectrum of the activated carbon is 70 cm⁻¹ or less.

## Description

### Technical Field

The present invention relates to a composite, a positive electrode mixture, a positive electrode for a lithium-ion battery, a lithium-ion battery, a method for producing a composite, a use of an activated carbon, and a method for producing an activated carbon.

Specifically, the present invention relates to a composite that are capable of imparting excellent rate characteristics to lithium-ion batteries and have a small environmental impact during production, a positive electrode mixture, a positive electrode for a lithium-ion battery, and a lithium-ion battery, a method for producing a composite, a use of an activated carbon, and a method for producing an activated carbon.

### Background Art

Regarding the electric capacities of all-solid-state lithium-ion batteries, studies are underway regarding a method of using sulfur for a positive electrode due to its large theoretical capacity. However, sulfur has low electron conductivity and low lithium-ion conductivity and thus has a problem of a small discharge capacity (poor rate characteristics) at a high current density.

In Patent Document 1, a positive electrode mixture containing a solid electrolyte containing a Li element or a Na element, a S element, and a halogen element selected from the group consisting of I, Br, Cl, and F, and a sulfur-based active material as a positive electrode mixture that is used in all-solid-state lithium-ion batteries has been proposed. Here, the sulfur-based active material is used in compositing with Ketjen black or an activated carbon obtained by alkali activation.

Although it is not for a use in a battery, a technique of obtaining an activated carbon by activation under pressure for the purpose of improving ethanol adsorption capacity, and the like has been reported (Non-Patent Documents 1 and 2).

### Related Art Documents

### Patent Documents

[Patent Document 1] JP 2014-011033 A

### Non-Patent Documents

[Non-Patent Document 1] "Pressurized physical activation: A simple production method for activated carbon with a highly developed pore structure", Carbon, 183 (2021), p.735-742
[Non-Patent Document 2] "Study on the applicability of pressurized physically activated carbon as an adsorbent in adsorption heat pumps", RSC Adv., 2022, 12, p.2558-2563

### Summary of Invention

However, for conventional techniques including Patent Document 1, there has been found room for further improvement from the viewpoint of improving the rate characteristics of lithium-ion batteries and the viewpoint of reducing the environmental impact during production.

An object of the present invention is to provide a composite that are capable of imparting excellent rate characteristics to lithium-ion batteries and have a small environmental impact during production, a positive electrode mixture, a positive electrode for a lithium-ion battery, and a lithium-ion battery, a method for producing a composite, a use of an activated carbon, and a method for producing an activated carbon.

As a result of intensive studies, the present inventors found that a composite of an activated carbon that is activated under specific conditions and sulfur is capable of imparting excellent rate characteristics to lithium-ion batteries and has a small environmental impact during production, and completed the present invention.

According to the present invention, it is possible to provide the following composite and the like.
1. A composite comprising an activated carbon having a specific surface area of 1,400 m²/g or more and satisfying one or both of the following conditions (A) and (B), and
   at least one of elemental sulfur and a discharge product of elemental sulfur:
   (A) a peak width of a D band in a Raman spectrum of the activated carbon is 100 cm⁻¹ or less, and
   (B) a peak width of a G band in the Raman spectrum of the activated carbon is 70 cm⁻¹ or less.
2. The composite according to 1, wherein the activated carbon satisfies the conditions (A) and (B).
3. The composite according to 1 or 2, wherein the activated carbon has a micropore capacity of 0.5 cc/g or more.
4. The composite according to any one of 1 to 3, wherein the activated carbon has an average pore width of 1.55 nm or less.
5. The composite according to any one of 1 to 4, which comprises 150 to 600 parts by mass of the elemental sulfur and the discharge product of the elemental sulfur in terms of sulfur based on 100 parts by mass of the activated carbon.
6. A positive electrode mixture comprising the composite according to any one of 1 to 5, and
   a sulfide solid electrolyte.
7. A positive electrode mixture comprising a composite including an activated carbon having a specific surface area of 1,400 m²/g or more, and at least one of elemental sulfur and a discharge product of elemental sulfur, and
   a sulfide solid electrolyte,
   wherein the positive electrode mixture satisfies one or both of the following conditions (A') and (B'):
      (A') a peak width of a D band in a Raman spectrum of the positive electrode mixture is 100 cm⁻¹ or less, and
      (B') a peak width of a G band in the Raman spectrum of the positive electrode mixture is 90 cm⁻¹ or less.
8. The positive electrode mixture according to 7, wherein the positive electrode mixture satisfies the conditions (A') and (B').
9. The positive electrode mixture according to any one of 6 to 8, wherein the sulfide solid electrolyte comprises at least a lithium atom, a phosphorus atom, a sulfur atom and a halogen atom.
10. The positive electrode mixture according to any one of 6 to 9, which comprises 40% by mass or more of the elemental sulfur and the discharge product of the elemental sulfur in terms of sulfur.
11. A positive electrode for a lithium-ion battery comprising the positive electrode mixture according to any one of 6 to 10.
12. A lithium-ion battery comprising the positive electrode for a lithium-ion battery according to 11.
13. A method for producing a composite, comprising:
   performing gas activation on an activated carbon under pressure, and
   compositing the gas-activated activated carbon, and at least one of elemental sulfur and a discharge product of elemental sulfur.
14. A method for producing a composite, comprising: compositing an activated carbon on which gas activation is performed under pressure, and at least one of elemental sulfur and a discharge product of elemental sulfur.
15. The method for producing a composite according to 13 or 14, wherein the gas activation is performed at a pressure of 2 atm or higher in terms of absolute pressure.
16. A method for producing a composite, comprising: compositing an activated carbon having a specific surface area of 1,400 m²/g or more and satisfying one or both of the following conditions (A) and (B), and at least one of elemental sulfur and a discharge product of elemental sulfur:
   (A) a peak width of a D band in a Raman spectrum of the activated carbon is 100 cm⁻¹ or less, and
   (B) a peak width of a G band in the Raman spectrum of the activated carbon is 70 cm⁻¹ or less.
17. A composite produced by the method for producing a composite according to any one of 13 to 16.
18. A use of an activated carbon, wherein an activated carbon having a specific surface area of 1,400 m²/g or more and satisfying one or both of the following conditions (A) and (B) is used for compositing it with at least one of elemental sulfur and a discharge product of elemental sulfur:
   (A) a peak width of a D band in a Raman spectrum of the activated carbon is 100 cm⁻¹ or less, and
   (B) a peak width of a G band in the Raman spectrum of the activated carbon is 70 cm⁻¹ or less.
19. A use of an activated carbon, wherein an activated carbon on which gas activation is performed under pressure is used for compositing it with at least one of elemental sulfur and a discharge product of elemental sulfur.
20. A method for producing a gas-activated activated carbon that is used for compositing it with at least one of elemental sulfur and a discharge product of elemental sulfur, comprising:
   performing gas activation on an activated carbon under pressure.
21. The method for producing a gas-activated activated carbon according to 20, wherein the gas activation is performed at a pressure of 2 atm or higher in terms of absolute pressure.

According to the present invention, it is possible to provide a composite that are capable of imparting excellent rate characteristics to lithium-ion batteries and have a small environmental impact during production, a positive electrode mixture, a positive electrode for a lithium-ion battery, and a lithium-ion battery, a method for producing a composite, a use of an activated carbon, and a method for producing an activated carbon.

### Brief Description of Drawings

Fig. 1 is a Raman spectrum (raw data) of Example 1.
Fig. 2 is a view for describing an example of how to obtain peak widths of a D band and a G band in the Raman spectrum. A solid line indicates the Raman spectrum (raw data), a dotted line indicates a smoothed Raman spectrum, and a broken line indicates a differential curve. The scale on the right side of the graph relates to the differential curve.

### Description of Embodiments

Hereinafter, a composite, a positive electrode mixture, a positive electrode for a lithium-ion battery, a lithium-ion battery, a method for producing a composite, an activated carbon, and a method for producing an activated carbon of the present invention will be described in detail.

In the present specification, "x to y" represents a numerical range of "x or more and y or less". Upper limit values and lower limit values written for numerical ranges can be arbitrarily combined.

### 1. Composite and method for producing composite

A composite according to an aspect of the present invention includes
an activated carbon having a specific surface area of 1,400 m²/g or more and satisfying one or both of the following conditions (A) and (B), and
at least one of elemental sulfur and a discharge product of elemental sulfur:
   (A) a peak width of a D band in a Raman spectrum of the activated carbon is 100 cm⁻¹ or less, and
   (B) a peak width of a G band in the Raman spectrum of the activated carbon is 70 cm⁻¹ or less.

According to the composite according to the present aspect, excellent rate characteristics can be imparted to lithium-ion batteries, and an effect of a small environmental impact during production can be obtained.

From the alkali-activated activated carbon used in Patent Document 1 described above, since a large amount of the alkali is discharged as waste during production, the impact on the environment is large, and the production cost is also high due to the influence of the wastewater treatment cost. The activated carbon that is used in the present aspect is not only capable of reducing the environmental impact during production or the production cost but is also capable of significantly improving the rate characteristics of lithium-ion batteries as compared with the alkali-activated activated carbon. In particular, the activated carbon is capable of exhibiting excellent rate characteristics even when compared with the alkali-activated activated carbon having approximately the same specific surface area. The reason for such a rate characteristics effect to be exhibited is not clear but is presumed as described below.

First, the activated carbon has a specific surface area of 1,400 m²/g or more, whereby it becomes possible for elemental sulfur or a discharge product thereof to be more thinly and uniformly disposed on the carbon material, electrons are uniformly supplied, and high battery performance can be exhibited.

Regarding the condition (A), it is estimated that, in the activated carbon having a peak width of the D band in the Raman spectrum of 100 cm⁻¹ or less, the number of the kinds of defects is small, and the number of sites at which lithium ions are trapped is small. Such an effect acts synergistically with the effect of the specific surface area of 1,400 m²/g or more, and excellent rate characteristics are imparted to lithium-ion batteries.

In addition, regarding the condition (B), in the activated carbon having a peak width of the G band in the Raman spectrum of 70 cm⁻¹ or less, it is considered that a local graphite structure is homogeneously growing, and it is estimated that a high level of electron conduction attributed to the graphite structure, chemical stability, lithium conduction through graphite layers, and the like are favorably exhibited. Such an effect acts synergistically with the effect of the specific surface area of 1,400 m²/g or more, and excellent rate characteristics are imparted to lithium-ion batteries.

### (Activated carbon)

In one embodiment, the peak width of the D band in the Raman spectrum of the activated carbon is 10 to 100 cm⁻¹, 10 to 99 cm⁻¹, 20 to 95 cm⁻¹, or 50 to 90 cm⁻¹.

When the half width of the D band is 100 cm⁻¹ or less, since the number of the kinds of defects in the activated carbon is small, and the number of sites at which lithium ions are trapped is small, in the case of using this activated carbon in a battery, it is expected that resistance during the conduction of lithium ions becomes small.

The D band is normally a peak having a maximum intensity in the vicinity of 1,350 cm⁻¹. "The vicinity of" 1,350 cm⁻¹ is, for example, within a range of 1,350 ± 50 cm⁻¹, 1,350 ± 30 cm⁻¹, or 1,350 ± 20 cm⁻¹.

The peak width of the D band in the Raman spectrum of the activated carbon is a value that is measured by a method to be described in Examples.

In one embodiment, the peak width of the G band in the Raman spectrum of the activated carbon is 10 to 70 cm⁻¹, 20 to 65 cm⁻¹, or 30 to 60 cm⁻¹.

When the peak width of the G band is 70 cm⁻¹ or less, it is considered that the graphite structure of the activated carbon is homogeneously formed, and high electrical conductivity or lithium conduction between graphite layers can be expected.

The G band is normally a peak having a maximum intensity in the vicinity of 1,580 cm⁻¹. "The vicinity of" 1,580 cm⁻¹ is, for example, within a range of 1,580 ± 50 cm⁻¹, 1,580 ± 30 cm⁻¹, or 1,580 ± 20 cm⁻¹.

The peak width of the G band in the Raman spectrum of the activated carbon is a value that is measured by a method to be described in Examples.

In one embodiment, the activated carbon satisfies the conditions (A) and (B). This makes the activated carbon have a small number of lithium trap sites and high electrical conductivity and high lithium conductivity and exhibit superior performance as a conduction aid in batteries in which conduction of ions and electrons is important. As a result, superior rate characteristics are imparted to lithium-ion batteries.

In one embodiment, the activated carbon has a specific surface area of 1,400 to 6,000 m²/g. When the specific surface area is 1,400 m²/g or more, it becomes possible for elemental sulfur or a discharge product thereof to be more thinly and uniformly disposed on the carbon material, electrons are uniformly supplied, and high battery performance can be exhibited. From this viewpoint, the specific surface area is preferably 1,600 m²/g or more, more preferably 2,000 m²/g or more, and still more preferably 2,200 m²/g or more. When the specific surface area is 6,000 m²/g or less, 5,000 m²/g or less, 4,000 m²/g or less, 3,500 m²/g or less, or even 3,000 m²/g or less, the yield at the time of producing the activated carbon becomes high, and the productivity is excellent.

The specific surface area of the activated carbon is a value that is measured by a method to be described in Examples.

In one embodiment, the activated carbon has a micropore capacity of 0.5 cc/g or more. This increases the amount of sulfur that can be held as minute domains in the activated carbon and increases the amount of sulfur that is used in a charge/discharge reaction, leading to improvement in the energy densities of batteries. From this viewpoint, the micropore capacity of the activated carbon is more preferably 0.6 cc/g or more, and still more preferably 0.7 cc/g or more. In addition, the micropore capacity is more preferably 0.8 cc/g or more and 0.9 cc/g or more in this order. The micropore capacity of the activated carbon is normally 3.0 cc/g or less.

The pore capacity of the activated carbon is a value that is measured by a method to be described in Examples.

In one embodiment, the activated carbon has an average pore width of 1.55 nm or less. This disperses the sulfur held in the activated carbon into smaller domains, whereby electron conductivity is uniformly imparted. As a result, the electrochemical reaction of sulfur is likely to proceed, whereby the utilization factor of sulfur increases, leading to improvement in the energy densities of batteries. From this viewpoint, the average pore width of the activated carbon is preferably 1.50 nm or less and more preferably 1.40 nm or less.

The average pore width of the activated carbon is a value that is measured by a method (αₛ method) to be described in Examples.

### (Elemental sulfur and discharge product of elemental sulfur)

The elemental sulfur (sulfur) is not particularly limited, but the purity thereof is preferably 95% by mass or more, more preferably 96% by mass or more, and particularly preferably 97% by mass or more.

Examples of the crystal systems of the elemental sulfur include α-sulfur (orthorhombic), β-sulfur (monoclinic), γ-sulfur (monoclinic), amorphous sulfur, and the like. These may be used alone, or two or more kinds thereof may be used in combination. The elemental sulfur becomes a melt by heating.

Part or all of the elemental sulfur changes to a discharge product during a battery reaction. Therefore, in the composite of one embodiment, a discharge product of the elemental sulfur is present. When a discharge product is present, the sulfur included in the composite is used as the total amount of the elemental sulfur and the sulfur contained in the discharge product.

Examples of the discharge product of the elemental sulfur include Li₂S in a fully discharged state, and Li₂S₂, Li₂S₄, Li₂S₆, Li₂S₈ and the like which are lithium polysulfides in the middle stage thereof.

In one embodiment, in the composite, part or all of the elemental sulfur is attached to (impregnated in) the pores in the activated carbon. In addition, the elemental sulfur that is not immersed in the pores is present to cover part or all of the activated carbon. Whether or not the sulfur is impregnated in the pores in the activated carbon can be confirmed by analyzing a particle cross section of the activated carbon using an analysis method capable of element mapping such as SEM-EDS and TEM-EDX, and then by evaluating the overlap between an element derived from the activated carbon and the sulfur element.

In one embodiment, when the amount of the elemental sulfur is increased in the composite, the elemental sulfur is present even outside the pores of the activated carbon. In this case, the composite can be a lump such as a pellet, but it can be made into a powder by mechanical pulverization.

In one embodiment, the composite includes 150 to 600 parts by mass, 200 to 550 parts by mass, or 220 to 500 parts by mass of the elemental sulfur and the discharge product of the elemental sulfur in terms of sulfur based on 100 parts by mass of the activated carbon. When the amount thereof is 600 parts by mass or less, it is possible to uniformly impart electrical conductivity to sulfur in the activated carbon, and higher battery performance can be expected in a case where the composite is made into a mixture. When the amount thereof is 150 parts by mass or more, a sufficient amount of the sulfur is secured, and an electrode material having a higher energy density can be obtained.

A method for producing the composite according to an aspect of the present invention described above is not particularly limited.

In one embodiment, the composite according to an aspect of the present invention is a composite produced by any one of the methods for producing a composite according to first to third aspects of the present invention to be described below. Matters described regarding any one of the first to third aspects can be appropriately combined with other aspects.

A method for producing a composite according to an aspect (also referred to as "first aspect") of the present invention includes: performing gas activation on an activated carbon under pressure, and compositing the gas-activated activated carbon, and at least one of elemental sulfur and a discharge product of elemental sulfur.

The activated carbon that is subjected to the activation treatment is not particularly limited, and examples thereof include a phenol resin-derived activated carbon obtained by carbonizing a spherical phenol resin by firing, carbonized products derived from plants such as charcoal, bamboo charcoal and coconut shell charcoal, carbon derived from petroleum pitch, carbon derived from coal pitch, carbon derived from rayon, carbon derived from acrylonitrile, and the like.

The phenol resin-derived activated carbon has a high residual carbon rate and is an artificially synthesized resin raw material, and thus has a highly controllable structure, which is desirable. In addition, from the plant-derived carbonized products, a hierarchical structure derived from a plant-derived structure can be expected to emerge, and carbon dioxide in the air is absorbed during the growing of plants, which is thus also desirable from the viewpoint of decarbonization. In addition, the carbon derived from petroleum pitch and coal pitch has an advantage in that a large amount thereof can be procured at a low cost.

Examples of a gas that is used for the gas activation include carbon dioxide, water vapor, air, and the like.

The use of carbon dioxide as the gas makes the effect of the activation mild and makes it easy to control the degree of activation.

When carbon dioxide is used, the concentration of the carbon dioxide in the gas is, for example, 50 to 100% by volume.

In addition, water vapor and air are gas species that can be procured at a lower cost, and further cost reduction can be expected. As the gas that is used for the gas activation, a plurality of gas types can be combined together.

In one embodiment, the gas activation of the activated carbon is performed at a pressure of 2 atm or higher in terms of absolute pressure.

In one embodiment, the gas activation of the activated carbon is performed at a pressure of 2 to 100 atm in terms of absolute pressure, 3 to 10 atm in terms of absolute pressure, or 5 to 9 atm in terms of absolute pressure.

When the pressure is 2 atm or higher in terms of absolute pressure, the gas activation uniformly proceeds up to microdomains in the carbon particles, and the activated carbon having a high specific surface area can be obtained even in the gas activation. When the pressure is 100 atm or lower in terms of absolute pressure, an electric furnace capable of heating the activated carbon under pressurization can be preferably applied, and in particular, when the pressure is 10 atm or lower in terms of absolute pressure (or lower than 10 atm in terms of absolute pressure), the facility cost can be suppressed at a low level.

In one embodiment, the time of the activation treatment is longer than 0 minutes and 99 hours or shorter, 1 minute or longer and 24 hours or shorter, or 5 minutes or longer and 8 hours or shorter.

The temperature of the activation treatment can be set as appropriate depending on the gas species, the pressure, and the like, but it is preferably 600°C or higher, and more preferably 700°C or higher. In addition, it is preferably 1,200°C or lower, and more preferably 1,100°C or lower. When it is 600°C or higher, the activation suitably proceeds, and when it is 1,200°C or lower, the amount of energy consumed is relatively small, and a furnace can be produced with a relatively inexpensive material, and economic rationality is thus high.

When the gas activation is performed on the activated carbon under pressure, it is possible to obtain the activated carbon having a specific surface area of 1,400 m²/g or more and satisfying one or both of the conditions (A) and (B) as the gas-activated activated carbon.

The gas-activated activated carbon is composited with at least one of the elemental sulfur and the discharge product of the elemental sulfur.

Here, the term "compositing" means attaching at least one of the elemental sulfur and the discharge product of the elemental sulfur to the surface (pore inner surfaces and pore outer surfaces) of the activated carbon. This can be coating the surface of the activated carbon with at least one of the elemental sulfur and the discharge product of the elemental sulfur.

A compositing method is not particularly limited, and examples thereof include a method in which the gas-activated activated carbon and at least one of the elemental sulfur and the discharge product of the elemental sulfur are mixed together and heated, and the like.

The heating temperature is not particularly limited, and it is, for example, 130 to 445°C, 140 to 400°C, or 150 to 350°C. When the heating temperature is 130°C or higher, since the heating temperature exceeds the melting point of the elemental sulfur, which is 115°C, the melting of sulfur and the impregnation of the activated carbon can be expected. The upper limit of the heating temperature is preferably equal to or lower than, or lower than the boiling point (445°C) of the elemental sulfur. In particular, since lithium polysulfide or lithium sulfide, which is a discharge product of elemental sulfur, has a high melting point, the heating temperature may be set to a high temperature exceeding 445°C.

The heating time is not particularly limited and is, for example, 0.1 to 99 hours, 1 to 24 hours, or 2 to 8 hours.

A method for producing a composite according to another aspect (also referred to as "second aspect") of the present invention includes: compositing an activated carbon on which gas activation is performed under pressure, and at least one of elemental sulfur and a discharge product of elemental sulfur.

A method for producing a composite according to still another aspect (also referred to as "third aspect") of the present invention includes: compositing an activated carbon having a specific surface area of 1,400 m²/g or more and satisfying one or both of the following conditions (A) and (B), and at least one of elemental sulfur and a discharge product of elemental sulfur.

### 2. Use of an activated carbon and method for producing activated carbon

A use of the activated carbon according to an aspect of the present invention is a use of an activated carbon, in which an activated carbon is used for compositing it with at least one of elemental sulfur and a discharge product of elemental sulfur. Here, the activated carbon is an activated carbon having a specific surface area of 1,400 m²/g or more and satisfying one or both of the conditions (A) and (B), or an activated carbon on which gas activation is performed under pressure.

A method for producing a gas-activated activated carbon according to an aspect of the present invention is a method for producing a gas-activated activated carbon that is used for compositing it with at least one of elemental sulfur and a discharge product of elemental sulfur, including: performing gas activation on an activated carbon under pressure.

Regarding the use of an activated carbon and the method for producing an activated carbon, the description of "1. Composite and method for producing composite" is appropriately incorporated.

### 3. Positive electrode mixture

A positive electrode mixture according to an aspect of the present invention includes the composite according to an aspect of the present invention, and a sulfide solid electrolyte. This makes it possible to impart excellent rate characteristics to lithium-ion batteries and makes it possible to obtain an effect of a small environmental impact during production.

A positive electrode mixture according to another aspect of the present invention is a positive electrode mixture including
a composite including an activated carbon having a specific surface area of 1,400 m²/g or more, and at least one of elemental sulfur and a discharge product of elemental sulfur, and
a sulfide solid electrolyte,
wherein the positive electrode mixture satisfies one or both of the following conditions (A') and (B'):
   (A') a peak width of a D band in a Raman spectrum of the positive electrode mixture is 100 cm⁻¹ or less, and
   (B') a peak width of a G band in the Raman spectrum of the positive electrode mixture is 90 cm⁻¹ or less.

This makes it possible to impart excellent rate characteristics to lithium-ion batteries and makes it possible to obtain an effect of a small environmental impact during production.

The Raman spectrum of the positive electrode mixture is a Raman spectrum measured for the positive electrode mixture. The D band and the G band in the Raman spectrum of the positive electrode mixture can also be referred to as the D band and the G band derived from the activated carbon in a state of being contained in the positive electrode mixture and have the same technical significance.

In one embodiment, the peak width of the D band in the Raman spectrum of the positive electrode mixture is 10 to 100 cm⁻¹, 10 to 99 cm⁻¹, 20 to 95 cm⁻¹, or 55 to 90 cm⁻¹.

When the peak width of the D band is 100 cm⁻¹ or less, since the number of the kinds of defects in the activated carbon included in the positive electrode mixture is small, and the number of sites at which lithium ions are trapped is small, in the case of using this positive electrode mixture in a battery, it is expected that resistance during the conduction of lithium ions becomes small.

The peak width of the D band in the Raman spectrum of the positive electrode mixture is a value that is measured by a method to be described in Examples.

In one embodiment, the peak width of the G band in the Raman spectrum of the positive electrode mixture is 10 to 90 cm⁻¹, 20 to 80 cm⁻¹, or 30 to 70 cm⁻¹.

When the peak width of the G band is 90 cm⁻¹ or less, it is considered that the graphite structure of the activated carbon included in the positive electrode mixture is homogeneously formed, and high electrical conductivity or lithium conduction between graphite layers can be expected.

The peak width of the G band in the Raman spectrum of the positive electrode mixture is a value that is measured by a method to be described in Examples.

In one embodiment, the positive electrode mixture satisfies the conditions (A') and (B'). This makes the activated carbon included in the positive electrode mixture have a small number of lithium trap sites and high electrical conductivity and high lithium conductivity and exhibit superior performance as a conduction aid in batteries in which conduction of ions and electrons is important. As a result, superior rate characteristics are imparted to lithium-ion batteries.

Hereinafter, the positive electrode mixtures according to an aspect and another aspect of the present invention will be described in more detail.

### (Sulfide solid electrolyte)

The sulfide solid electrolyte is a solid electrolyte that contains at least sulfur atoms and that exhibits ion conductivity caused by contained metal atoms, and is specifically a solid electrolyte that contains, in addition to sulfur atoms, preferably lithium atoms and phosphorus atoms, more preferably lithium atoms, phosphorus atoms, and halogen atoms, and that has ion conductivity caused by lithium atoms.

In one embodiment, the solid electrolyte contains at least a lithium atom, a phosphorus atom, a sulfur atom and a halogen atom.

In one embodiment, the solid electrolyte contains a lithium atom, a phosphorus atom, a sulfur atom, a bromine atom, and an iodine atom.

The sulfide solid electrolyte may be an amorphous sulfide solid electrolyte or a crystalline sulfide solid electrolyte.

### (Amorphous sulfide solid electrolyte)

Any amorphous sulfide solid electrolytes can be employed with no particular limitations as long as the solid electrolytes contain at least a sulfur atom and develop ionic conductivity arising from a metal atom contained therein, and typical examples thereof preferably include solid electrolytes that are composed of lithium sulfide and phosphorus sulfide such as Li₂S-P₂S₅ and contain a sulfur atom, a lithium atom and a phosphorus atom; solid electrolytes composed of lithium sulfide, phosphorus sulfide and lithium halide such as Li₂S-P₂S₅-LiI, Li₂S-P₂S₅-LiCl, Li₂S-P₂S₅-LiBr and Li₂S-P₂S₅-LiI-LiBr; solid electrolytes further containing other elements such as an oxygen element and a silicon element, for example, such as Li₂S-P₂S₅-Li₂O-LiI and Li₂S-SiS₂-P₂S₅-LiI. From the viewpoint of obtaining a higher ionic conductivity, solid electrolytes composed of lithium sulfide, phosphorus sulfide and lithium halide, such as Li₂S-P₂S₅-LiI, Li₂S-P₂S₅-LiCl, Li₂S-P₂S₅-LiBr and Li₂S-P₂S₅-LiI-LiBr, are preferable.

The types of elements constituting the amorphous sulfide solid electrolyte can be confirmed with, for example, an ICP emission spectrometer.

When the amorphous sulfide solid electrolyte includes at least Li₂S-P₂S₅, the molar ratio between Li₂S and P₂S₅ is preferably 30 to 85:15 to 70, more preferably 40 to 80:20 to 60, and still more preferably 45 to 78:22 to 55 from the viewpoint of high chemical stability and a higher ion conductivity to be obtained.

When the amorphous sulfide solid electrolyte is, for example, Li₂S-P₂S₅-LiI-LiBr, the total amount of the lithium sulfide and the phosphorus pentasulfide is preferably 30 to 95 mol%, more preferably 35 to 90 mol%, and still more preferably 40 to 85 mol%. In addition, the amount of the lithium bromide is preferably 1 to 99 mol%, more preferably 20 to 90 mol%, still more preferably 40 to 80 mol%, and particularly preferably 50 to 70 mol% based on the total amount of the lithium bromide and the lithium iodide.

In addition, the shape of the amorphous sulfide solid electrolyte is not particularly limited, and examples thereof include a particle shape. The average particle size (D₅₀) of the particulate amorphous sulfide solid electrolyte may be, for example, in the range of 0.01 µm to 500 µm, or 0.1 to 200 µm.

In the present specification, the average particle size (D₅₀) is a particle size in a drawn particle size distribution cumulative curve at which the result of sequential adding-up from the particle having the smallest particle size reaches 50% of all particles, and the volume distribution is an average particle size which can be measured using, for example, a laser diffraction/scattering particle size distribution measuring instrument.

### (Crystalline sulfide solid electrolyte)

The crystalline sulfide solid electrolyte may be, for example, a so-called glass ceramic obtained by heating the amorphous sulfide solid electrolyte to a crystallization temperature or higher, or a sulfide solid electrolyte having the following crystal structure can be employed.

Examples of the crystal structure that the crystalline sulfide solid electrolyte containing a lithium atom, a sulfur atom and a phosphorus atom can have include a Li₃PS₄ crystal structure, a Li₄P₂S₆ crystal structure, a Li₇PS₆ crystal structure, a Li₇P₃S₁₁ crystal structure, a crystal structure having peaks at 2θ of near 20.2° and near 23.6° (for example, JP 2013-16423 A), and the like.

In addition, examples of the crystal structure that the crystalline sulfide solid electrolyte containing a lithium atom, a sulfur atom, a phosphorus atom and a halogen atom can have include a Li₄₋ₓGe₁₋ₓPₓS₄-based thio-LISICON Region II type crystal structure, crystal structures similar to the Li₄₋ₓGe₁₋ₓPₓS₄-based thio-LISICON Region II type, which have been described above, and the like.

In X-ray diffraction measurement using CuKα rays, the diffraction peaks of the Li₃PS₄ crystal structure appear at, for example, 2θ of near 17.5°, 18.3°, 26.1°, 27.3°, and 30.0°, the diffraction peaks of the Li₄P₂S₆ crystal structure appear at, for example, 2θ of near 16.9°, 27.1°, and 32.5°, the diffraction peaks of the Li₇PS₆ crystal structure appear at, for example, 2θ of near 15.3°, 25.2°, 29.6°, and 31.0°, the diffraction peaks of the Li₇P₃S₁₁ crystal structure appear at, for example, 2θ of near 17.8°, 18.5°, 19.7°, 21.8°, 23.7°, 25.9°, 29.6°, and 30.0°, the diffraction peaks of the Li₄₋ₓGe₁₋ₓPₓS₄-based thio-LISICON Region II crystal structure appear at, for example, 2θ of near 20.1°, 23.9°, and 29.5°, and the diffraction peaks of the crystal structures similar to the Li₄₋ₓGe₁₋ₓPₓS₄-based thio-LISICON Region II type appear at, for example, 2θ of near 20.2° and 23.6°. These peak positions may vary within a range of ±0.5°.

In addition, examples of the crystal structure of the crystalline sulfide solid electrolyte include an argyrodite type crystal structure. Examples of the argyrodite type crystal structure include a Li₇PS₆ crystal structure; crystal structures represented by compositional formulae Li₇₋ₓP_{1-y}Si_{y}S₆ and Li₇₊ₓP_{1-y}Si_{y}S₆ (x is -0.6 to 0.6 and y is 0.1 to 0.6) having a Li₇PS₆ structural skeleton; and a crystal structure represented by Li_{7-x-2y}PS_{6-x-y}Clₓ (0.8 ≤ x ≤ 1.7, 0< y ≤ -0.25x + 0.5); a crystal structure represented by Li₇₋ₓPS₆₋ₓHaₓ (Ha is Cl or Br, and x is preferably 0.2 to 1.8).

Among the above crystal structures, the crystal structure of the crystalline sulfide solid electrolyte is preferably the Li₃PS₄ crystal structure, the thio-LISICON Region II crystal structure, or the argyrodite type crystal structure.

The shape of the crystalline sulfide solid electrolyte is not particularly limited, and examples thereof include a particle shape. The average particle size (D₅₀) of the particulate crystalline sulfide solid electrolyte can be, similar to the above-described average particle size (D₅₀) of the amorphous sulfide solid electrolyte, for example, within a range of 0.01 µm to 500 µm or 0.1 to 200 µm.

In one embodiment, the positive electrode mixture includes 40% by mass or more of the elemental sulfur and the discharge product of the elemental sulfur in terms of sulfur. Here, the elemental sulfur and the discharge product of the elemental sulfur are derived from the above-described composite.

In one embodiment, the positive electrode mixture includes 40 to 90% by mass, 40 to 70% by mass, or 40 to 60% by mass of the elemental sulfur and the discharge product of the elemental sulfur in terms of sulfur. Here, the elemental sulfur and the discharge product of the elemental sulfur are derived from the above-described composite.

### 3. Positive electrode for lithium-ion battery and lithium-ion battery

A positive electrode for a lithium-ion battery according to an aspect of the present invention includes one or more selected from the group consisting of the positive electrode mixture according to an aspect of the present invention and the positive electrode mixture according to another aspect of the present invention.

According to the positive electrode for a lithium-ion battery according to the present aspect, excellent rate characteristics can be imparted to lithium-ion batteries, and an effect of a small environmental impact during production can be obtained.

A lithium-ion battery according to an aspect of the present invention includes the positive electrode for a lithium-ion battery according to an aspect of the present invention.

According to the lithium-ion battery according to the present aspect, the rate characteristics are excellent, and an effect of a small environmental impact during production can be obtained.

The positive electrode mixture can be used as a positive electrode layer of a lithium-ion battery. In this case, known constitutions in the present technical field can be used as other constitutions of the lithium-ion battery, and a negative electrode layer containing no lithium ions in a negative electrode active material can be selected.

The negative electrode active material that is contained in a negative electrode layer of the lithium-ion battery can be used as a "negative electrode active material containing lithium ions". In addition, the negative electrode active material that is contained in the negative electrode layer of the lithium-ion battery may be a "negative electrode active material that supplies lithium ions to the positive electrode".

A negative electrode of the lithium-ion battery is not particularly limited as long as the negative electrode can be used in ordinary batteries. The negative electrode may be composed of a negative electrode mixture obtained by mixing a negative electrode active material and a solid electrolyte.

As the negative electrode active material, a commercially available active material can be used. For example, a carbon material, metallic Sn, metallic In, metallic Si, metallic Li, an alloy of these metals, and the like can be used. Specific examples thereof include natural graphite, various kinds of graphite, lithium titanate, metal powders such as Si, Sn, Al, Sb, Zn and Bi, metal alloys such as SiAl, Sn₅Cu₆, Sn₂Co and Sn₂Fe, others such as amorphous alloys and plating alloys. The particle size is not particularly limited, but those having an average particle size of several µm to 80 µm can be suitably used.

An electrolyte layer is not particularly limited, and a known electrolyte layer can be used. For example, an oxide solid electrolyte, a sulfide solid electrolyte, and a polymer-based electrolyte are preferable, and a sulfide solid electrolyte is more preferable from the viewpoint of ion conductivity. As this sulfide solid electrolyte, the sulfide solid electrolyte that is used in the above-described positive electrode mixture is preferably used.

A method for producing the lithium-ion battery is not particularly limited. Examples thereof include a method in which a solid electrolyte layer is formed on a sheet having a positive electrode layer composed of one or more selected from the group consisting of the positive electrode mixture according to an aspect of the present invention and the positive electrode mixture according to another aspect of the present invention formed on a positive electrode current collector, and a sheet having a negative electrode layer formed on a negative electrode current collector formed in advance is stacked thereon and pressed and the like.

### Examples

Hereinafter, Examples of the present invention will be described, but the present invention is not limited to these Examples.

### (Example 1)

### (1) Production of activated carbon

A spherical phenol resin (manufactured by Asahi Yukizai Corporation, particle diameter: 17 µm) was heated up to 600°C at 5°C/minute in a nitrogen flow atmosphere (200 mL/min) in a tubular electric furnace, and then it was held for an hour to be carbonized, thereby obtaining phenol resin-derived carbon (activated carbon before activation).

The obtained phenol resin-derived carbon was pressurized up to 1.0 MPa (10 atm) in a tubular electric furnace at a carbon dioxide flow rate of 100 to 200 mL/minute, it was heated up to 1,000°C at 5°C/minute, and then it was activated for an hour, thereby obtaining activated carbon-1.

### (2) Preparation of composite

The activated carbon-1 and elemental sulfur (S) were put into a glass bottle at a weight ratio of 1:5, and it was sealed in a SUS tube container. They were heated at 150°C for six hours and at 300°C for 2.75 hours in an electric furnace, thereby obtaining a composite (powder) of the activated carbon and the elemental sulfur.

### (3) Preparation of solid electrolyte

0.4127 g of lithium sulfide, 0.6655 g of phosphorus pentasulfide, 0.2137 g of lithium iodide, 0.2080 g of lithium bromide, and ten zirconia balls having a diameter of 10 mm were charged into a 45 mL zirconia pot, and it was sealed. They were mixed (mechanical milling) at a rotation speed of 370 rpm for 40 hours using a planetary ball mill (manufactured by Fritsch GmbH, model number: P-7) to obtain a powder. The obtained powder was heated at 195°C for three hours to obtain a solid electrolyte.

### (4) Preparation of positive electrode mixture

0.2 g of the composite obtained as described above and 0.2 g of the solid electrolyte obtained as described above were charged together with ten zirconia balls having a diameter of 10 mm into a 45 mL zirconia pot, and it was sealed. A pulverization treatment was performed thereon under conditions of a rotation speed of 370 rpm, a time of 20 hours, and room temperature using the planetary ball mill (manufactured by Fritsch GmbH, model number: P-7) to obtain a positive electrode mixture (powder).

### (5) Production of (all-solid-state) lithium-ion battery

100 mg of the solid electrolyte prepared above was charged into a Macor cylinder having a diameter of 10 mm, and it was pressure-molded. The positive electrode mixture prepared above was charged onto a pressurizing surface such that the amount of the sulfur in the positive electrode mixture reached 1.75 mg, and it was pressure-molded again. An indium foil and a lithium foil were charged onto a pressurizing surface opposite to the positive electrode mixture, and it was pressurized, thereby producing an all-solid-state battery.

### (Example 2)

A composite, a solid electrolyte, a positive electrode mixture, and a lithium-ion battery were produced in the same manner as in (2) to (5) of Example 1 except that activated carbon-2 obtained as described below was used instead of the activated carbon-1.

### <Production of activated carbon-2>

A spherical phenol resin (manufactured by Asahi Yukizai Corporation, particle diameter: 17 µm) was heated up to 600°C at 5°C/minute in a nitrogen flow atmosphere (200 mL/min) in a tubular electric furnace, and then it was held for an hour to be carbonized, thereby obtaining phenol resin-derived carbon (activated carbon before activation).

The obtained phenol resin-derived carbon was pressurized up to 1.0 MPa in a tubular electric furnace at a carbon dioxide flow rate of 100 to 200 mL/minute, it was heated up to 1,000°C at 5°C/minute, and then it was activated for 0.5 hours, thereby obtaining activated carbon-2.

### (Example 3)

A composite, a solid electrolyte, a positive electrode mixture, and a lithium-ion battery were produced in the same manner as in (2) to (5) of Example 1 except that activated carbon-3 obtained as described below was used instead of the activated carbon-1.

### <Production of activated carbon-3>

A spherical phenol resin (manufactured by Asahi Yukizai Corporation, particle diameter: 8 µm) was heated up to 600°C at 5°C/minute in a nitrogen flow atmosphere (200 mL/min) in a tubular electric furnace, and then it was held for an hour to be carbonized, thereby obtaining phenol resin-derived carbon (activated carbon before activation).

The water vapor of the obtained phenol resin-derived carbon was pressurized up to 0.5 MPa (5 atm) in a tubular electric furnace, it was heated up to 850°C at 5°C/minute, and then it was activated for 45 minutes, thereby obtaining activated carbon.

### (Comparative Example 1)

A composite, a solid electrolyte, a positive electrode mixture, and a lithium-ion battery were produced in the same manner as in (2) to (5) of Example 1 except that activated carbon-3 obtained as described below was used instead of the activated carbon-1.

### <Production of activated carbon-3>

A spherical phenol resin (spherical phenol resin BEAPS, manufactured by Asahi Yukizai Corporation, particle diameter: 8 µm) was heated up to 600°C at 5°C/minute in a nitrogen flow atmosphere (200 mL/min) in a tubular electric furnace, and then it was held for an hour to be carbonized, thereby obtaining phenol resin-derived carbon (activated carbon before activation).

The obtained phenol resin-derived carbon and potassium hydroxide six times as much as the carbon were put into a Ni crucible, they were put into a stainless steel container, they were heated up to 700°C at 5°C/minute in a nitrogen flow atmosphere (100 mL/min) using an electric furnace, they were held for an hour to be activated, they were neutralized with hydrochloric acid, then, they were washed with water until the pH reached seven, and they were dried, thereby obtaining activated carbon-3.

### (Comparative Example 2)

A composite, a solid electrolyte, a positive electrode mixture, and a lithium-ion battery were produced in the same manner as in (2) to (5) of Example 1 except that Ketjen black (manufactured by Lion Specialty Chemicals Co., Ltd., "KB600JD") was used instead of the activated carbon-1.

### [Measurement method and evaluation method]

### (1) Measurement of specific surface area, pore capacity and average pore width

For the specific surface area, pore capacity (micropore capacity) and average pore width of the activated carbon used to prepare the composites (gas-activated activated carbon, and Ketjen black in Comparative Example 2, which will be also true below), a nitrogen adsorption isotherm was measured using a pore size distribution measuring instrument "Autosorb-3" manufactured by Quantacrome Instruments or "Nova" manufactured by Anton Paar QuantTec Inc. with reference to Carbon 1997 No. 197, pp. 159 to 166, and it was analyzed by an αₛ method.

For the unification of the analysis results, the analysis of non-particles and mesopores in the αₛ method was performed within a range of αₛ = 1 to 2 for all samples.

### (2) Raman measurement

(2-1)
The Raman spectra of the activated carbon (alone) used for the preparation of the composites were measured. The measurement conditions are as described below. Different particles were randomly selected and measured at N = 5, and the average spectrum thereof was used as a Raman spectrum (raw data) in peak width calculation.

### <Measurement conditions>

Instrument: DXR2 (Thermo Fisher Scientific)
Exposure time: 10 seconds
Cumulated number: 20 times
Background: 20 times
Laser wavelength: 532 nm
Laser power: 2.0 mW
Pinhole: 25 µm pinhole
Resolution: HIGH RES GRATING
Measurement range: 50 to 1,800 cm⁻¹
Measurement magnification: Objective lens 50 times

The peak width of the D band in the Raman spectrum is defined as the width between the maximum value and the minimum value within a range of 700 to 1,475 cm⁻¹ in which the Raman spectrum is differentiated. In addition, the peak width of the G band in the Raman spectrum is defined as the width between the maximum value and the minimum value within a range of 1,475 to 1,800 cm⁻¹ in which the Raman spectrum is differentiated.

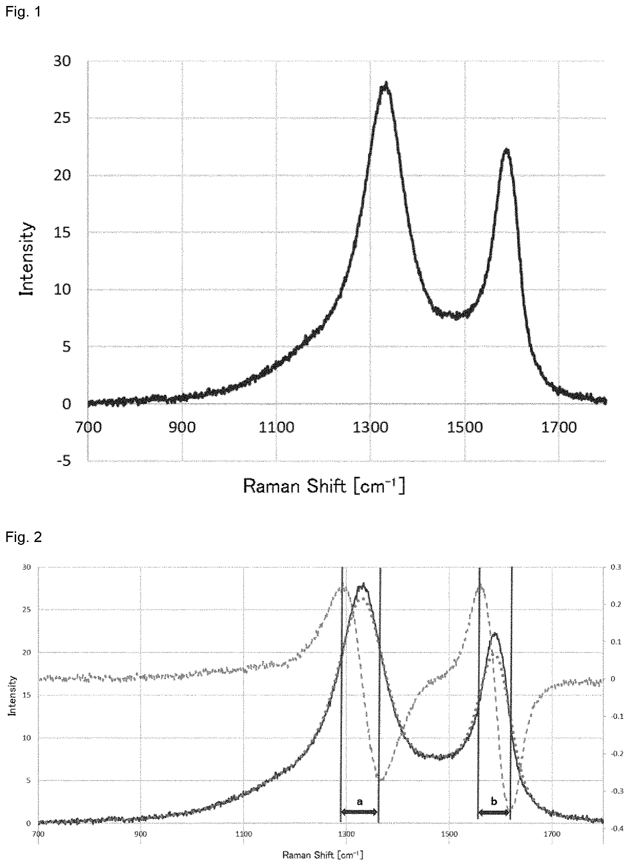

Hereinafter, the Raman spectrum of Example 1 will be specifically described as an example with reference to the drawings. Fig. 1 is the Raman spectrum (raw data) of Example 1. Fig. 2 is a view for describing an example of how to obtain the peak widths of the D band and the G band in the Raman spectrum. In Fig. 2, the solid line indicates the Raman spectrum (raw data), the dotted line indicates a smoothed Raman spectrum, and the broken line indicates a differential curve. The scale on the right side of the graph relates to the differential curve. a is the peak width of the D band, and b is the peak width of the G band.

First, background processing (linear method) is performed on the Raman spectrum (raw data) shown in Fig. 1 (and the solid line in Fig. 2) using the values at 700 cm⁻¹ and 1,800 cm⁻¹, which are outside the peak range.

Next, the Raman spectrum (raw data) is smoothed using a moving average to obtain a smoothed Raman spectrum as shown in Fig. 2.

Next, the smoothed Raman spectrum is differentiated to obtain a differential curve.

The width a between the maximum value and the minimum value within the range of 700 to 1,475 cm⁻¹ in the differential curve is defined as the peak width of the D band. In addition, the width b between the maximum value and the minimum value within the range of 1,475 to 1,800 cm⁻¹ in the differential curve is defined as the peak width of the G band.

(2-2)
The Raman spectrum of the positive electrode mixture was measured. The measurement conditions are as described below. According to these conditions, the Raman spectrum can be measured while a reaction with sulfur or the solid electrolyte included in the positive electrode mixture is suppressed by suppressing the energy of the laser. Different particles were randomly selected and measured at N = 10, and the average spectrum thereof was used as a Raman spectrum (raw data) in peak width calculation.

When a material susceptible to deterioration is a measurement object, the Raman spectrum can be measured with the output of the laser (laser power) adjusted within a range of 0.1 to 0.5 mW.

### <Measurement conditions>

Instrument: DXR2 (Thermo Fisher Scientific)
Exposure time: Five seconds
Cumulated number: Five times
Background: 20 times
Laser wavelength: 532 nm
Laser power: 0.5 mW
Pinhole: 50 µm pinhole
Resolution: HIGH RES GRATING
Measurement range: 50 to 1,800 cm⁻¹
Measurement magnification: Objective lens 100 times

The peak widths of the D band and the G band in the Raman spectrum of the positive electrode mixture were determined in the same manner as in the above-described section "(2-1)".

(2-3)
When the sensitivity is not sufficient at the time of direct Raman analysis of the positive electrode mixture, it is possible to separate the activated carbon that constitutes the positive electrode mixture (remove the solid electrolyte or sulfur) from the positive electrode mixture and perform Raman measurement with only the activated carbon left. The measurement conditions in this case are the same as in the above-described section "(2-1)". At the time of separating the activated carbon from the positive electrode mixture, only the activated carbon can be separated by dissolving and removing (washing) the solid electrolyte with a polar solvent such as water and ethanol, and further by heating the positive electrode mixture at a temperature that is 600°C or lower and at which sulfur vaporizes to remove sulfur.

### (3) Evaluation of battery characteristics (rate characteristics)

Constant current charge/discharge tests of the all-solid-state batteries obtained in Examples and Comparative Examples were performed. The cut-off potential of the constant current test was set to 0.8 to 2.2 V vs. Li-In, and the current density in each cycle was set to a condition shown in Table 1.

**[Table 1]**

| Cycle | Current density [mA] | |
|---|---|---|
| | Discharge | Charge |
| 1, 2 | 0.147 | 0.147 |
| 3 | 0.147 | 0.293 |
| 4 | 0.293 | 0.293 |
| 5 | 0.586 | 0.293 |
| 6 | 0.967 | 0.293 |
| 7 | 1.47 | 0.293 |
| 8 | 2.93 | 0.293 |
| 9 | 5.86 | 0.293 |
| 10 | 0.293 | 0.293 |

The discharge capacities per gram of sulfur at the 2^{nd}, 5^{th} and 6^{th} cycles were calculated.

The results are shown in Table 2.

**[Table 2]**

| | Specific surface area [m²/g] | Micropore capacity [cc/g] | Average pore width [nm] | Activated carbon alone | | Positive electrode mixture | | Discharge capacity | | |
|---|---|---|---|---|---|---|---|---|---|---|
| | | | | D band peak width [cm⁻¹] | G band peak width [cm⁻¹] | D band peak width [cm⁻¹] | G band peak width [cm⁻¹] | Second cycle (0.05 C) [mAh/g] | Fifth cycle (0.2 C) [mAh/g] | Sixth cycle (0.33 C) [mAh/g] |
| Example 1 | 2350 | 1.1 | 1.3 | 74 | 59 | 63 | 67 | 1148 | 1152 | 1109 |
| Example 2 | 1990 | 0.78 | 0.95 | 81 | 55 | 73 | 64 | 1080 | 1129 | 1037 |
| Example 3 | 2090 | 1.04 | 1.1 | 88 | 60 | 81 | 57 | 1197 | 1130 | 1016 |
| Comparative Example 1 | 2290 | 1.2 | 1.1 | 110 | 73 | 162 | 74 | 1105 | 926 | 599 |
| Comparative Example 2 | 1340 | 0.12 | 1.6 | 76 | 57 | 66 | 65 | 967 | 982 | 975 |

From Table 2, it was found that in Examples 1 and 2, the discharge capacities are maintained high and the rate characteristics are excellent as compared with those in Comparative Examples 1 and 2.

Although several embodiments and/or examples of the present invention have been described above in detail, for those skilled in the art, it is easy to add numerous modifications to these exemplary embodiments and/or examples without substantially departing from the novel teachings and effects of the present invention. Therefore, many of these modifications fall within the scope of the present invention.

The contents of the literature cited in this specification and the applications on which the present application claims priority under the Paris Convention are incorporated herein by reference in their entirety.

## Claims

1. A composite comprising an activated carbon having a specific surface area of 1,400 m²/g or more and satisfying one or both of the following conditions (A) and (B), and
at least one of elemental sulfur and a discharge product of elemental sulfur:
(A) a peak width of a D band in a Raman spectrum of the activated carbon is 100 cm⁻¹ or less, and
(B) a peak width of a G band in the Raman spectrum of the activated carbon is 70 cm⁻¹ or less.

2. The composite according to Claim 1, wherein the activated carbon satisfies the conditions (A) and (B).

3. The composite according to Claim 1 or 2, wherein the activated carbon has a micropore capacity of 0.5 cc/g or more.

4. The composite according to any one of Claims 1 to 3, wherein the activated carbon has an average pore width of 1.55 nm or less.

5. The composite according to any one of Claims 1 to 4, which comprises 150 to 600 parts by mass of the elemental sulfur and the discharge product of the elemental sulfur in terms of sulfur based on 100 parts by mass of the activated carbon.

6. A positive electrode mixture comprising the composite according to any one of Claims 1 to 5, and
a sulfide solid electrolyte.

7. A positive electrode mixture comprising a composite including an activated carbon having a specific surface area of 1,400 m²/g or more, and at least one of elemental sulfur and a discharge product of elemental sulfur, and
a sulfide solid electrolyte,
wherein the positive electrode mixture satisfies one or both of the following conditions (A') and (B'):
(A') a peak width of a D band in a Raman spectrum of the positive electrode mixture is 100 cm⁻¹ or less, and
(B') a peak width of a G band in the Raman spectrum of the positive electrode mixture is 90 cm⁻¹ or less.

8. The positive electrode mixture according to Claim 7, wherein the positive electrode mixture satisfies the conditions (A') and (B').

9. The positive electrode mixture according to any one of Claims 6 to 8, wherein the sulfide solid electrolyte comprises at least a lithium atom, a phosphorus atom, a sulfur atom and a halogen atom.

10. The positive electrode mixture according to any one of Claims 6 to 9, which comprises 40% by mass or more of the elemental sulfur and the discharge product of the elemental sulfur in terms of sulfur.

11. A positive electrode for a lithium-ion battery comprising the positive electrode mixture according to any one of Claims 6 to 10.

12. A lithium-ion battery comprising the positive electrode for a lithium-ion battery according to Claim 11.

13. A method for producing a composite, comprising:
performing gas activation on an activated carbon under pressure, and
compositing the gas-activated activated carbon, and at least one of elemental sulfur and a discharge product of elemental sulfur.

14. A method for producing a composite, comprising: compositing an activated carbon on which gas activation is performed under pressure, and at least one of elemental sulfur and a discharge product of elemental sulfur.

15. The method for producing a composite according to Claim 13 or 14, wherein the gas activation is performed at a pressure of 2 atm or higher in terms of absolute pressure.

16. A method for producing a composite, comprising: compositing an activated carbon having a specific surface area of 1,400 m²/g or more and satisfying one or both of the following conditions (A) and (B), and at least one of elemental sulfur and a discharge product of elemental sulfur:
(A) a peak width of a D band in a Raman spectrum of the activated carbon is 100 cm⁻¹ or less, and
(B) a peak width of a G band in the Raman spectrum of the activated carbon is 70 cm⁻¹ or less.

17. A composite produced by the method for producing a composite according to any one of Claims 13 to 16.

18. A use of an activated carbon, wherein an activated carbon having a specific surface area of 1,400 m²/g or more and satisfying one or both of the following conditions (A) and (B) is used for compositing it with at least one of elemental sulfur and a discharge product of elemental sulfur:
(A) a peak width of a D band in a Raman spectrum of the activated carbon is 100 cm⁻¹ or less, and
(B) a peak width of a G band in the Raman spectrum of the activated carbon is 70 cm⁻¹ or less.

19. A use of an activated carbon, wherein an activated carbon on which gas activation is performed under pressure is used for compositing it with at least one of elemental sulfur and a discharge product of elemental sulfur.

20. A method for producing a gas-activated activated carbon that is used for compositing it with at least one of elemental sulfur and a discharge product of elemental sulfur, comprising:
performing gas activation on an activated carbon under pressure.

21. The method for producing a gas-activated activated carbon according to Claim 20, wherein the gas activation is performed at a pressure of 2 atm or higher in terms of absolute pressure.
